# EUROPÄISCHE PATENTANMELDUNG

(11) **EP 4 169 870 A1**
(43) Veröffentlichungstag der Anmeldung: **26.04.2023**
(21) Anmeldenummer: 22196008.1
(22) Anmeldetag: 16.09.2022
(51) Int. Cl.: B67B 1/00, B67B 3/26, B65G 29/00, B65G 47/84

(54) **VORRICHTUNG UND VERFAHREN ZUM VERSCHLIESSEN VON BEHÄLTNISSEN MIT VERSCHLÜSSEN**

(30) Priorität: 22.10.2021 DE 102021127564
(71) Anmelder: Syntegon Technology GmbH, 71332 Waiblingen (DE)
(72) Erfinder: Grimme, Tobias, 91555 Feuchtwangen (DE)
(74) Vertreter: DREISS Patentanwälte PartG mbB

(57) **Zusammenfassung**

Vorrichtung (10) zum Verschließen von Behältnissen (12) mit Verschlüssen, insbesondere Stopfen, umfassend ein Transportrad (14) zum kontinuierlichen Transportieren der Behältnisse (12), wobei das Transportrad (14) mehrere Transportradaufnahmen (16) aufweist, eine Zuführeinrichtung (20) zum getakteten und von dem Transport des Transportrads (14) unabhängigen Zuführen der Behältnisse (12) zu dem Transportrad (14), eine Abführeinrichtung (24) zum Abführen der Behältnisse (12) aus dem Transportrad (14), eine Verschließeinrichtung (28) zum Verschließen der Behältnisse (12) mit Verschlüssen, während sie in den Transportradaufnahmen (16) des Transportrades (14) aufgenommen sind, und eine Inspektionseinrichtung (30), um an einer Position des Transportrads (14) einen Verschlusszustand eines jeweiligen Behältnisses (12) zu überprüfen, wobei die mittels der Inspektionseinrichtung (30) als nicht ordnungsgemäß verschlossen ermittelten Behältnisse (12) mittels des Transportrades (14) erneut der Verschließeinrichtung (28) zugeführt werden, wobei in diesem Fall die Zuführung weiterer Behältnisse (12) untergebracht wird, so dass die nicht ordnungsgemäß verschlossenen Behältnisse (12) erneut der Verschließeinrichtung (28) zugeführt werden können.

## Beschreibung

Die Erfindung betrifft eine Vorrichtung zum Verschließen von Behältnissen mit Verschlüssen, insbesondere Stopfen, mit Merkmalen des Anspruchs 1 und ein Verfahren zum Verschließen von Behältnissen mit Verschlüssen, insbesondere Stopfen, mit Merkmalen des nebengeordneten Anspruchs.

Vorrichtungen zum Verschließen von Behältnissen, wie bspw. Vials, mit Verschlüssen, wie bspw. Stopfen, sind bekannt. So können Vials z. B. in einem Transportrad transportiert und während des Transports über eine Rampe nach oben gedrückt werden. Dort können die Stopfen über eine sich mitdrehende Stopfenscheibe zugeführt und positioniert werden, so dass die Stopfen beim Anheben der Vials in die Vials gedrückt werden. Üblicherweise weist eine Füll- und Verschließanlage aus wirtschaftlichen Gründen nur eine Stopfeneindrückstation auf. Kommt es zu einem Fehler beim Stopfensetzen bzw. Verschließen (Verklemmung, Min-Stau, usw.) werden die entsprechenden Vials als Schlechtobjekt verworfen.

Es ist wünschenswert keine oder wenige Schlechtobjekte zu produzieren.

DE 10 2016 200 150 A1 und CN 211 366 928 U offenbaren jeweils eine Vorrichtung mit Merkmalen des Anspruchs 1.

Die Aufgabe der vorliegenden Erfindung besteht darin, eine Vorrichtung zum Verschließen von Behältnissen mit Verschlüssen, insbesondere Stopfen, und ein Verfahren zum Verschließen von Behältnissen mit Verschlüssen, insbesondere Stopfen, bereitzustellen, wobei Schlechtobjekte vermieden werden oder deren Anzahl zumindest gegenüber herkömmlichen Methoden reduziert werden kann.

Diese Aufgabe wird durch eine Vorrichtung zum Verschließen von Behältnissen mit Verschlüssen, insbesondere Stopfen, mit den Merkmalen des Anspruchs 1 gelöst.

Die Vorrichtung umfasst ein Transportrad zum kontinuierlichen Transportieren der Behältnisse. Das Transportrad weist mehrere Transportradaufnahmen auf, wobei jede Transportradaufnahme eingerichtet ist, um ein Behältnis aufnehmen zu können. Das Transportrad ist um eine Transportradachse rotierbar ausgebildet. Mit einem kontinuierlichen Transport ist vorliegend gemeint, dass die Behältnisse, insbesondere mit einer konstanten Geschwindigkeit, unterbrechungsfrei (also ohne Pause) von dem Transportrad transportiert (befördert) werden. Mit anderen Worten, während des Transports der Behältnisse, dreht sich (rotiert) das Transportrad, insbesondere mit einer konstanten Geschwindigkeit, ständig um die Transportradachse.

Die Vorrichtung umfasst weiter eine Zuführeinrichtung zum getakteten und von dem Transport (bzw. Förderung) des Transportrads unabhängigen Zuführen der Behältnisse zu dem Transportrad. Die Zuführung erfolgt in einem Zuführbereich der Vorrichtung. Dabei kann die Zuführung unterbrochen werden bzw. die Zuführeinrichtung kann gestoppt werden, während das Transportrad weiter fördert bzw. sich weiter um die Transportradachse dreht (rotiert). Mit einer getakteten Zuführung ist vorliegend gemeint, dass die Behältnisse in Chargen dem Transportrad zugeführt werden. Mit anderen Worten, das kontinuierlich rotierende Transportrad wird chargenweise mit Behältnissen bestückt.

Die Vorrichtung umfasst weiter eine Abführeinrichtung zum Abführen der Behältnisse aus dem Transportrad in einem Abführbereich der Vorrichtung. Dabei kann das Abführen der Behältnisse kontinuierlich umgesetzt werden. Ebenso denkbar ist es, dass das Abführen der Behältnisse getaktet umgesetzt werden kann.

Die Vorrichtung umfasst weiter eine Verschließeinrichtung zum Verschließen der Behältnisse mit Verschlüssen. Die Verschließeinrichtung ist ausgebildet und angeordnet, um die Behältnisse zu verschließen während sie in den Transportradaufnahmen des Transportrades aufgenommen sind. Da die Behältnisse während des kontinuierlichen Transports verschlossen werden, kann hier von einem kontinuierlichen Verschließen gesprochen werden.

Die Verschließeinrichtung kann in Form eines Verschließrades ausgebildet sein und über dem Transportrad angeordnet sein (d. h. in Schwerkraftrichtung ist zunächst das Verschließrad und dann das Transportrad angeordnet). Das Verschließrad kann sich mit derselben Geschwindigkeit wie das Transportrad kontinuierlich um die Transportradachse drehen. Das Verschließrad kann Verschließradaufnahmen aufweisen, die zur Aufnahme jeweils eines Verschlusses ausgebildet sein können. Die Verschlüsse können über die im Transportrad transportierten Behältnisse gebracht (positioniert) werden. Die Behältnisse können bspw. über eine Rampe transportiert werden und dabei nach oben (also entgegen der Schwerkraftrichtung) in Richtung der Verschlüsse befördert werden (dieses "Anheben" ist jedoch so gering, dass die Behältnisse in den Aufnahmen des Transportrads verbleiben), so dass die Verschlüsse und die Behältnisse zusammengedrückt werden und damit die Behältnisse verschlossen werden.

Auch andere Verschließeinrichtungen sind denkbar, wie bspw. in Form eines Verschließrades, wobei die Drehachse des Verschließrades und des Transportrades beabstandet voneinander angeordnet sein können. Ebenso denkbar ist es, dass die Verschließeinrichtung einen Roboterarm umfassen oder als Roboterarm ausgebildet sein kann.

Die Vorrichtung umfasst weiter eine Inspektionseinrichtung. Die Inspektionseinrichtung ist eingerichtet und angeordnet, um an einer Position des Transportrads einen Verschlusszustand eines jeweiligen Behältnisses in einer Transportradaufnahme des Transportrades zu überprüfen.

Mittels der Inspektionseinrichtung können nicht ordnungsgemäß verschlossene Behältnisse ermittelt werden. Mit anderen Worten, mittels der Inspektionseinrichtung kann überprüft werden, ob ein Behältnis ordnungsgemäß verschlossen worden ist oder nicht. Ein nicht ordnungsgemäß verschlossenes Behältnis kann bspw. ein Behältnis ohne Verschluss sein. Ebenso denkbar ist, dass der Verschluss nicht vollständig oder schief auf das Behältnis aufgebracht wird, was ebenso ein nicht ordnungsgemäß verschlossenes Behältnis darstellen kann.

Die Inspektionseinrichtung kann eine Erfassungseinrichtung umfassen. Die Erfassungseinrichtung kann eingerichtet sein, um ein Behältnis, insbesondere mit seinem Verschluss, in

Form von optischen Daten zu erfassen. Die Erfassungseinrichtung kann einen optischen Sensor, eine Lichtschranke und/oder eine Kamera umfassen. Die optischen Daten können z. B. ein Video, ein Bild/Foto oder ein (bzw. mehrere) gemessener Helligkeitswert (Intensität) sein. So kann bspw. mittels einer Lichtschranke überprüft werden, ob ein Verschluss auf einem Behältnis vorhanden ist oder nicht. Hierzu kann die Lichtschranke z. B. knapp über dem Behältnis angeordnet sein, wobei ein Behältnis mit einem Verschluss die Lichtschranke unterbricht und ein Behältnis ohne Verschluss die Lichtschranke nicht unterbricht.

Die Inspektionseinrichtung kann weiter eine Auswerteeinrichtung (z. B. in Form eines Computers) umfassen. Dabei kann die Auswerteeinrichtung eingerichtet sein, um die mittels der Erfassungseinrichtung erfassten optischen Daten auszuwerten. So kann bspw. anhand eines mittels einer Kamera aufgenommenen Bildes eines Behältnisses ermittelt werden, ob ein Verschluss auf einem Behältnis vorhanden ist oder nicht. In Bezug auf die oben erwähnte Lichtschranke ist es denkbar, dass die Auswerteeinrichtung ermitteln kann, ob die Lichtschranke unterbrochen wurde oder nicht und entsprechend ob ein Verschluss auf dem Behältnis vorhanden ist oder nicht.

Der Zuführbereich, die Verschließeinrichtung, die Inspektionseinrichtung und der Abführbereich sind in Drehrichtung des Transportrades aufeinanderfolgend angeordnet.

Die Vorrichtung ist eingerichtet, um die mittels der Inspektionseinrichtung als nicht ordnungsgemäß verschlossen ermittelten Behältnisse mittels des Transportrades, und insbesondere einer Weiche, erneut der Verschließeinrichtung zuzuführen.

Die Vorrichtung ist eingerichtet, um die nicht ordnungsgemäß verschlossenen Behältnisse im Abführbereich in ihren Transportradaufnahmen im Transportrad zu halten, sodass die nicht ordnungsgemäß verschlossenen Behältnisse durch Drehung des Transportrads wieder in den Zuführbereich transportiert werden. Mit anderen Worten, die nicht ordnungsgemäß verschlossenen Behältnisse werden nicht mittels der Abführeinrichtung aus dem Transportrad abgeführt, sondern in dem Transportrad belassen. Das Transportrad transportiert die nicht ordnungsgemäß verschlossenen Behältnisse durch Rotation um die Transportradachse wieder zu der Verschließeinrichtung.

Die Zuführeinrichtung ist ausgebildet, um in dem Fall einer Ermittlung eines nicht ordnungsgemäß verschlossenen Behältnisses die Zuführung weiterer Behältnisse zu unterbrechen. So können die nicht ordnungsgemäß verschlossenen Behältnisse den Zuführbereich passieren und erneut der Verschließeinrichtung zugeführt werden. Es ist denkbar, dass die Verschließeinrichtung das nicht ordnungsgemäß verschlossene Behältnis mit einem neuen Verschluss verschließt. Ebenso denkbar ist, dass die Verschließeinrichtung einen nicht ordnungsgemäß sitzenden Verschluss (nicht vollständig verschlossen oder schief aufgebracht) erneut setzt.

So können die zunächst nicht ordnungsgemäß verschlossenen Behältnisse beim weiteren Durchgang ordnungsgemäß verschlossen werden. Mit anderen Worten, die nicht ordnungsgemäß verschlossenen Behältnisse müssen nicht als Schlechtobjekte aussortiert und entsorgt werden, sondern können durch das erneute Verschließen weiterverarbeitet und zum fertigen Produkt werden. Dies ist nicht nur ressourcenschonender, sondern auch (insbesondere bei teuren Produkten) wirtschaftlicher. Die bereits abgefüllten Behältnisse, die nicht ordnungsgemäß verschlossen worden sind, müssen samt dem Inhalt nicht mehr aussortiert bzw. entsorgt werden, sondern können weiterverwendet werden.

Die Zuführeinrichtung kann ein erstes Radsegment zum Zuführen der Behältnisse zu den Transportradaufnahmen des Transportrades umfassen. Das erste Radsegment kann mindestens eine erste Radsegmentaufnahme aufweisen. Die erste Radsegmentaufnahme kann eingerichtet sein, um ein Behältnis aufnehmen zu können.

Die Zuführeinrichtung kann ein zweites Radsegment zum Zuführen der Behältnisse zu den Transportradaufnahmen des Transportrades umfassen. Das zweite Radsegment kann mindestens eine zweite Radsegmentaufnahme aufweisen. Die zweite Radsegmentaufnahme kann eingerichtet sein, um ein Behältnis aufnehmen zu können.

Das erste Radsegment, das zweite Radsegment und/oder das Transportrad können eingerichtet sein, um die Behältnisse von der ersten Radsegmentaufnahme und/oder der zweiten Radsegmentaufnahme an die Transportradaufnahmen des Transportrades in dem Zuführbereich der Vorrichtung zu überführen. Das erste Radsegment und das zweite Radsegment können um eine gemeinsame Radsegmentachse rotierbar ausgebildet sein. Das erste Radsegment und das zweite Radsegment können unabhängig voneinander beweglich (rotierbar) ausgebildet sein. Insbesondere können die beiden Radsegmente und deren Bewegungen voneinander entkoppelt sein.

Ebenso denkbar ist es, dass die (rotierende) Bewegung der beiden Radsegmente gekoppelt sein kann. Mit anderen Worten, es ist denkbar, dass das erste Radsegment und das zweite Radsegment nur gemeinsam gedreht werden können. Dabei ist es insbesondere denkbar, dass die beiden Radsegmente entlang ihrer Bewegungsbahn um die Radsegmentachse beabstandet voneinander angeordnet sein können.

Die Zuführeinrichtung kann mindestens einen (insbesondere zwei) Transportrechen zum Zuführen der Behältnisse zu dem ersten Radsegment und/oder dem zweiten Radsegment umfassen. Mit anderen Worten, der Transportrechen kann zur Beladung des ersten und/oder des zweiten Radsegments eingerichtet sein. Die Ebenso denkbar ist es, dass die Zuführeinrichtung genau einen Transportrechen aufweisen kann.

Der Transportrechen kann mindestens eine Transportrechenaufnahme aufweisen, die eingerichtet ist, um ein Behältnis aufnehmen zu können. Der Transportrechen kann linear verfahrbar ausgebildet sein. Der Transportrechen kann eingerichtet sein, um translatorisch (also ohne eine Änderung seiner Orientierung) bewegt zu werden. Ebenso denkbar ist es, dass zwei Transportrechen vorgesehen sein können, wobei ein erster Transportrechen zur Beladung des ersten Radsegments und ein zweiter Transportrechen zur Beladung des zweiten Radsegments vorgesehen sein kann.

Die Abführeinrichtung kann ein Abtransportrad zum Abführen ordnungsgemäß verschlossener Behältnisse aus den Transportradaufnahmen des Transportrades umfassen. Das Abtransportrad kann um eine Abtransportradachse rotierbar ausgebildet sein. Das Abtransportrad kann mindestens eine Abtransportradaufnahme aufweisen, die eingerichtet ist, um ein Behältnis aufnehmen zu können. Insbesondere können das Transportrad und das Abtransportrad derart eingerichtet und angeordnet sein, dass die Transportradaufnahmen und die Abtransportradaufnahmen einander korrespondierend den Abführbereich der Vorrichtung passieren.

Die Transportradachse, die Radsegmentachse und/oder die Abtransportradachse können parallel zueinander angeordnet sein. Das Transportrad, das erste Radsegment, das zweite Radsegment und/oder das Abtransportrad können in derselben, insbesondere in Bezug auf die Schwerkraftrichtung waagerechten, Ebene angeordnet sein.

Die Vorrichtung kann im Abführbereich eine Weiche umfassen. Die Weiche kann eingerichtet sein, um wahlweise ein in der Transportradaufnahme des Transportrades aufgenommenes Behältnis in die Abtransportradaufnahme des Abtransportrades zu überführen oder in der Transportradaufnahme des Transportrades zu belassen. Mit anderen Worten, mittels der Weiche kann der Transportweg (Bewegungsbahn) eines Behältnisses, insbesondere innerhalb Abführbereichs, bestimmt bzw. zwischen zwei möglichen Transportwegen gewählt werden.

Die Vorrichtung kann im Zuführbereich eine Führungseinrichtung umfassen. Die Führungseinrichtung kann in Form einer Weiche ausgebildet sein. Die Führungseinrichtung kann eingerichtet sein, um mindestens ein, insbesondere als nicht ordnungsgemäß verschlossen ermitteltes, in der Transportradaufnahme des Transportrads aufgenommenes, Behältnis zumindest im Zuführbereich, insbesondere in einer weiteren Umdrehung des Transportrads, zu führen. Mit anderen Worten, die Behältnisse können im Zuführbereich mittels der Führungseinrichtung auf ihrer Bewegungsbahn ("in Spur") gehalten werden. Die Führungseinrichtung kann eingerichtet sein, um ein Herausfallen von Behältnissen aus den Transportradaufnahmen, insbesondere im Zuführbereich der Vorrichtung, zu verhindern. Die Führungseinrichtung kann in Form eines gekrümmten Elements ausgebildet sein, das die Behältnisse in den Transportradaufnahmen des Transportrads hält.

Weiter wird die zu lösende Aufgabe durch ein Verfahren zum Verschließen von Behältnissen mit Verschlüssen, insbesondere Stopfen, mit den Merkmalen des nebengeordneten Anspruchs gelöst.

Das Verfahren umfasst die Schritte:
Getaktetes und unterbrechbares Zuführen von Behältnissen zu einem Transportrad; Dabei kann das Zuführen insbesondere mittels einer Zuführeinrichtung umgesetzt werden.

Kontinuierliches Transportieren der Behältnisse mittels des Transportrades;
Verschließen der Behältnisse mittels einer Verschließeinrichtung mit jeweils einem Verschluss während die Behältnisse in dem Transportrad aufgenommen sind;
Inspizieren der verschlossenen Behältnisse während die Behältnisse in dem Transportrad aufgenommen sind; Dabei kann das Inspizieren insbesondere mittels einer Inspektionseinrichtung umgesetzt werden.

Ermitteln eines nicht ordnungsgemäß verschlossenen Behältnisses und Unterbrechen der Zuführung weiterer Behältnisse;
Transportieren des nicht ordnungsgemäß verschlossenen Behältnisses mittels des Transportrades, und insbesondere zweier Weichen, zum erneuten Verschließen;
Erneutes Verschließen des nicht ordnungsgemäß verschlossenen Behältnisses. Dabei kann das erneute Verschließen insbesondere mittels der Verschließeinrichtung umgesetzt werden.

Das Verfahren kann die Schritte umfassen:
Zuführen von Behältnissen mittels eines ersten Radsegments durch eine rotierende Bewegung des ersten Radsegments zu dem Transportrad in einem Zuführbereich;
Zuführen von Behältnissen mittels eines zweiten Radsegments durch eine rotierende Bewegung des zweiten Radsegments zu dem Transportrad in dem Zuführbereich;
Bewegen des ersten Radsegments und/oder des zweiten Radsegments derart, dass das erste Radsegment und das zweite Radsegment außerhalb des Zuführbereichs angeordnet sind, nachdem ein nicht ordnungsgemäß verschlossenes Behältnis ermittelt worden ist;
Transportieren des nicht ordnungsgemäß verschlossenen Behältnisses von der Inspektionseinrichtung durch den Abführbereich und den Zuführbereich mittels des Transportrades erneut hin zur Verschließeinrichtung.

Die, insbesondere als nicht ordnungsgemäß verschlossen ermittelten, Behältnisse können durch den Zuführbereich geführt bewegt werden. Dies kann mittels einer Führungseinrichtung umgesetzt werden.

Nach dem Inspizieren können die Behältnisse wahlweise von dem Transportrad, insbesondere mittels einer Abführeinrichtung, abgeführt oder mittels des Transportrades, und insbesondere zweiter Weichen, zum erneuten Verschließen transportiert werden.

Die Behältnisse können dem ersten Radsegment und/oder dem zweiten Radsegment, insbesondere mittels mindestens eines, insbesondere mittels genau eines, Transportrechens, getaktet zugeführt werden. Dabei ist es denkbar, dass in einem Takt das erste oder das zweite Radsegment mit Behältnissen Beladen wird. Es ist ebenso denkbar, dass in einem Takt ein mit Behältnissen bestückter Transportrechen seine Behältnisse an das erste oder das zweite Radsegment übergibt. Insbesondere kann genau ein Transportrechen vorgesehen sein.

Ebenso denkbar ist es, dass zwei Transportrechen vorgesehen sein können, wobei ein erster Transportrechen zur Beladung des ersten Radsegments und ein zweiter Transportrechen zur Beladung es zweiten Radsegments vorgesehen sein kann.

Bei dem Verfahren kann es vorgesehen sein, dass während die Behältnisse dem ersten Radsegment zugeführt werden, die in dem zweiten Radsegment aufgenommenen Behältnisse dem Transportrad zugeführt werden. Zusätzlich oder alternativ kann vorgesehen sein, dass während die Behältnisse dem zweiten Radsegment zugeführt werden, die in dem ersten Radsegment aufgenommenen Behältnisse dem Transportrad zugeführt werden. Mit anderen Worten, es ist denkbar, dass das erste Radsegment und das zweite Radsegment nacheinander und unabhängig voneinander mit Behältnissen beladen werden. Es ist ebenso denkbar, dass das erste Radsegment und das zweite Radsegment nacheinander und unabhängig voneinander ihre Behältnisse an das Transportrad übergeben.

Zur Durchführung des Verfahrens kann eine Vorrichtung gemäß obiger Ausführungen verwendet werden. Hinsichtlich der mit dem Verfahren erzielbaren Vorteile wird auf die diesbezüglichen Ausführungen zur Vorrichtung verwiesen. Zur weiteren Ausgestaltung des Verfahrens können die im Zusammenhang mit der Vorrichtung beschriebenen Maßnahmen dienen.

Weitere Merkmale, Einzelheiten und Vorteile der Erfindung ergeben sich aus dem Wortlaut der Ansprüche sowie aus der folgenden Beschreibung eines Ausführungsbeispiels anhand der Zeichnung. Es zeigt:

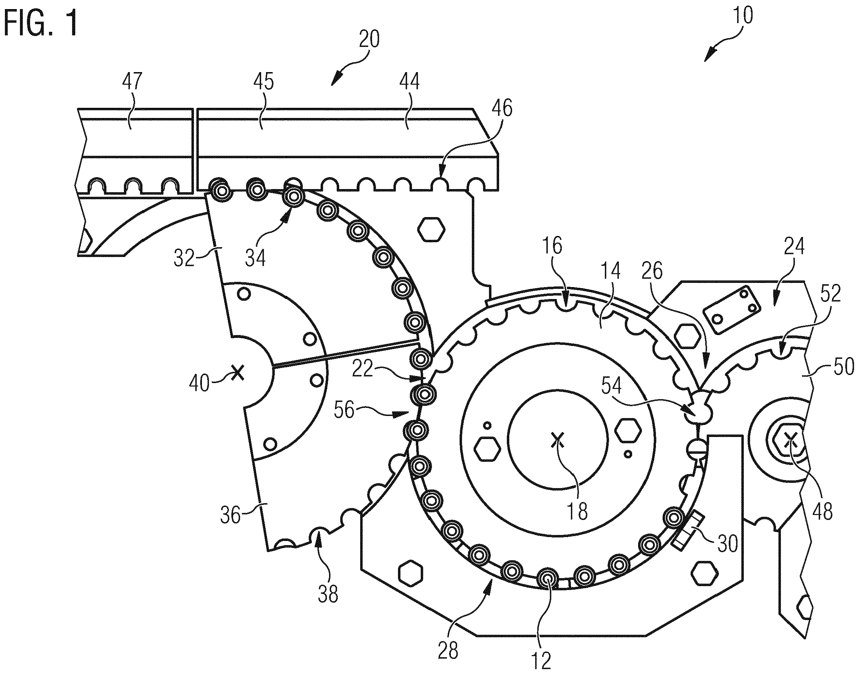

- Fig. 1:: eine schematische Darstellung der erfindungsgemäßen Vorrichtung.

In der nachfolgenden Beschreibung sowie in der Figur tragen sich entsprechende Bauteile und Elemente gleiche Bezugszeichen.

Figur 1 zeigt eine schematische Darstellung der erfindungsgemäßen Vorrichtung 10 zum Verschließen von Behältnissen 12.

Die Vorrichtung 10 weist ein Transportrad 14 zum kontinuierlichen transportieren der Behältnisse 12 auf. Das Transportrad 14 weist eine Vielzahl (vorliegend vierundzwanzig) von Transportradaufnahmen 16 auf.

Jede der Transportradaufnahmen 16 ist eingerichtet, um ein Behältnis 12 aufnehmen zu können. Vorliegend sind die Transportradaufnahmen 16 als radial nach außen gerichtete Ausnehmungen am Außenumfang des Transportrads 14 ausgebildet.

Das Transportrad 14 ist um eine Transportradachse 18 rotierbar ausgebildet. Damit werden die Behältnisse 12 in den Transportradaufnahmen 16 auf einer Kreisbahn um die Transportradachse 18 kontinuierlich transportiert bzw. befördert. Mit anderen Worten, das Transportrad 14 dreht sich kontinuierlich um die Transportradachse 18.

Die Vorrichtung 10 weist eine Zuführeinrichtung 20 auf. Diese ist zum getakteten und von dem Transport des Transportrads 14 unabhängigen Zuführen der Behältnisse 12 zu dem Transportrad 14 ausgebildet. Dabei findet die Zuführung der Behältnisse 12 zu dem Transportrad 14 in einem Zuführbereich 22 der Vorrichtung 10 statt.

Die Vorrichtung 10 weist eine Abführungseinrichtung 24 auf. Dieses zum Abführen der Behältnisse 12 aus dem Transportrad 14 ausgebildet. Dabei findet das Abführen der Behältnisse 12 aus dem Transportrad 14 in einem Abführbereich 26 der Vorrichtung 10 statt.

Die Vorrichtung 10 weist eine Verschließeinrichtung 28 auf. Diese dient zum Verschließen der Behältnisse 12 mit Verschlüssen. Die Verschließeinrichtung 28 ist ausgebildet und angeordnet, um die Behältnisse 12 zu verschließen während diese in den Transportradaufnahmen 16 des Transportrads 14 aufgenommen sind und auf ihrer Kreisbahn um die Transportradachse 18 bewegt werden. Der Übersicht halber ist die Verschließeinrichtung 28 in Figur 1 nicht dargestellt, sondern lediglich mit der Bezugszahl 28 und dem dazugehörigen Pfeil angedeutet.

Die Vorrichtung 10 weist eine Inspektionseinrichtung 30 auf. Die Inspektionseinrichtung 30 ist eingerichtet, um einen Verschlusszustand eines jeweiligen Behältnisses 12 in der Transportradaufnahme 16 des Transportrades 14 zu überprüfen. Die Inspektionseinrichtung 30 ist in Figur 1 lediglich schematisch angedeutet.

Die Zuführeinrichtung 20 weist ein erstes Radsegment 32 auf. Dieses dient der Zuführung der Behältnisse 12 zu den Transportradaufnahmen 16 des Transportrades 14 und weist vorliegend acht erste Radsegmentradaufnahmen 34 auf. Jede der ersten Radsegmentradaufnahmen 34 ist eingerichtet, um ein Behältnis 12 aufnehmen zu können. Das erste Radsegment 32 kann also mit acht Behältnissen 12 bestückt werden.

Die Zuführeinrichtung 20 weist ein zweites Radsegment 36 auf. Dieses dient der Zuführung der Behältnisse 12 zu den Transportradaufnahmen 16 des Transportrades 14 und weist vorliegend acht zweite Radsegmentradaufnahmen 38 auf. Jede der zweiten Radsegmentradaufnahmen 38 ist eingerichtet, um ein Behältnis 12 aufnehmen zu können. Das zweite Radsegment 36 kann also mit acht Behältnissen 12 bestückt werden.

Das erste Radsegment 32 und das zweite Radsegment 36 sind um eine gemeinsame Radsegmentachse 40 rotierbar ausgebildet. Vorliegend können die beiden Radsegmente 32, 36 unabhängig voneinander um die gemeinsame Radsegmentachse 40 rotiert werden.

Die Zuführeinrichtung 20 weist vorliegend zwei Transportrechen 44 auf. Diese dienen der Zuführung der Behältnisse 12 zu den beiden Radsegmenten 32, 36. Jeder Transportrechen 44 weist vorliegend acht (korrespondierend mit der Anzahl der ersten bzw. zweiten Radsegmentaufnahmen 34,38) Transportrechenaufnahmen 46 auf. Jede der Transportrechenaufnahmen 46 ist eingerichtet, um ein Behältnis 12 aufnehmen zu können.

Vorliegend wird mittels eines ersten Transportrechens 45 das erste Radsegment 32 mit Behältnissen 12 bestückt. Das zweite Radsegment 36 wird mittels eines zweiten Transportrechens 47 bestückt. Dabei geschieht sowohl die Zuführung der Behältnisse 12 an die beiden Radsegmente 32, 36, als auch die Zuführung der Behältnisse 12 an das Transportrad 14 chargenweise (also getaktet).

Die beiden Radsegmente 32, 36 können auch mit einem einzigen Transportrechen beladen werden. Dieser kann nach dem Beladen des ersten Radsegments 32 in einer Viereckbewegung zurücksetzten, neue Behältnisse 12 aufnehmen und wieder in Richtung der beiden Radsegmente 32, 36 bewegt werden, um das zweite Radsegment 36 zu beladen usw.

Die Abführeinrichtung 24 weist ein Abtransportrad 50 auf. Dieses dient zum Abführen ordnungsgemäß verschlossener Behältnisse 12 aus den Transportradaufnahmen 16 des Transportrades 14. Das Abtransportrad 50 ist um eine Abtransportradachse 48 rotierbar ausgebildet. Das Abtransportrad 50 weist eine Vielzahl von Abtransportradaufnahmen 52 auf. Jede der Abtransportradaufnahmen 52 ist eingerichtet, um ein Behältnis 12 aufnehmen zu können.

Die Radsegmentachse 40, die Transportradachse 18 und die Abtransportradachse 48 sind jeweils in Figur 1 mittels eines Kreuzes angedeutet und verlaufen jeweils senkrecht zur Zeichenebene der Figur 1.

Im Abführbereich 26 weist die Vorrichtung 10 eine Weiche 54 auf. Die Weiche 54 ist eingerichtet, um wahlweise ein in der Transportradaufnahme 16 des Transportrades 14 aufgenommenes Behältnis 12 an das Abtransportrad 50 zu überführen oder in der Transportradaufnahme 16 zu belassen. Die Weiche 54 ist in Figur 1 der Übersicht halber nicht dargestellt, sondern lediglich mit der Bezugszahl 54 und dem dazugehörigen Pfeil angedeutet.

Im Zuführbereich 22 weist die Vorrichtung 10 eine Führungseinrichtung 56 auf. Diese kann in Form einer Weiche ausgebildet sein. Mittels der Führungseinrichtung 56 ist ein geführtes Bewegen der Behältnisse auf ihrer Kreisbahn um die Transportradachse 18 im Zuführbereich 22 möglich. Der Übersicht halber ist die Führungseinrichtung 56 in Figur 1 nicht dargestellt, sondern lediglich mit der Bezugszahl 56 und dem dazugehörigen Pfeil angedeutet.

Die Vorrichtung 10 funktioniert wie folgt:
Das erste Radsegment 32 und das zweite Radsegment 36 werden nacheinander und abwechselnd (also getaktet) mittels der beiden Transportrechen 44 mit Behältnissen 12 bestückt.

Während ein Radsegment (in Figur 1 das erste Radsegment 32) mittels des Transportrechens 44 (in Figur 1 mittels des ersten Transportrechens 45) mit Behältnissen 12 bestückt wird, führt das andere, bereits mit Behältnissen 12 bestückte, Radsegment (in Figur 1 das zweite Radsegment 36) die aufgenommenen Behältnisse 12 dem Transportrad 14 zu. Dies stellt einen Takt dar.

Anschließend wird in einem nächsten Takt das nun leere Radsegment (in Figur 1 das zweite Radsegment 36) mittels des Transportrechens 44 (in Figur 1 mittels des zweiten Transportrechens 47) mit Behältnissen 12 bestückt, während das mit Behältnissen 12 bestückte Radsegment (in Figur 1 das erste Radsegment 32) die aufgenommenen Behältnisse 12 dem Transportrad 14 zuführt.

Ist ein Takt beendet, so ist ein Radsegment stets mit Behältnissen 12 bestückt, wobei das andere Radsegment keine Behältnisse 12 aufweist.

Nach dem oben beschriebenen getakteten Zuführen der Behältnisse 12 zu dem Transportrad 14, werden diese kontinuierlich transportiert. Während des kontinuierlichen Transports werden die Behältnisse 12 mittels der Verschließeinrichtung 28 verschlossen. Man kann daher von einem kontinuierlichen Verschließen der Behältnisse 12 sprechen.

Wird nun mittels der Inspektionseinrichtung 30 ein nicht ordnungsgemäß verschlossenes Behältnis 12 (bspw. ein Behältnis ohne Verschluss) festgestellt, so wird die Zuführung der Behältnisse 12 unterbrochen. Hierzu beenden die beiden Radsegmente 32, 36 den jeweiligen Takt. In Figur 1 würde hierzu das erste Radsegment 32 vollends bestückt werden, wobei das zweite Radsegment 36 vollends entleert werden würde.

Anschließend würde das nun mit den Behältnissen 12 bestückte erste Radsegment 32 angehalten werden, wobei das nun leere zweite Radsegment 36 weiter rotiert werden würde, bis der Zuführbereich 22 freigegeben ist. Anschließend kann auch das zweite Radsegment 36 außerhalb des Zuführbereich 22 angehalten werden.

Während dessen wird das als nicht ordnungsgemäß verschlossen erkanntes Behältnis weiter auf seiner Kreisbahn mittels des Transportrades 14 transportiert. Die Weiche 54 wird derart umgestellt, dass das nicht ordnungsgemäß verschlossene Behältnis 12 nicht an das Abtransportrad 50 übergeben wird, sondern weiter auf einer Kreisbahn um die Transportradachse 18 mittels des Transportrades 14 weiterbefördert wird.

Nachdem das nicht ordnungsgemäß verschlossene Behältnis 12 die Weiche 54 passiert hat, kann die Weiche 54 wieder umgestellt werden, sodass nachfolgende ordnungsgemäß verschlossene Behältnisse 12 weiter mittels des Abtransportrades 50 abgeführt werden können.

Das nicht ordnungsgemäß verschlossene Behältnis 12 wird so auf einer Kreisbahn wieder in den Zuführbereich 22 geführt und weiter erneut zu der Verschließeinrichtung 28. Dort kann das nicht ordnungsgemäß verschlossene Behältnis 12 mit einem neuen Verschluss bzw. ordnungsgemäß verschlossen werden.

Das nicht ordnungsgemäß verschlossene Behältnis 12 wird durch den Zuführbereich 22 geführt bewegt. Dies geschieht mittels der Führungseinrichtung 56, die bspw. in Form einer Weiche oder eines gebogenen Elements ausgebildet sein kann, welches das untere Enden des nicht ordnungsgemäß verschlossenen Behältnisses 12 auf der Kreisbahn um die Transportradachse 18 hält (und somit auch in der Transportradaufnahme 16).

Nachdem das nicht ordnungsgemäß verschlossene Behältnis 12 den Zuführbereich 22 passiert hat, kann die getakteten Zuführung mittels der Zuführeinrichtung 20 fortgesetzt werden.

## Patentansprüche

1. Vorrichtung (10) zum Verschließen von Behältnissen (12) mit Verschlüssen, insbesondere Stopfen, umfassend
- ein Transportrad (14) zum kontinuierlichen Transportieren der Behältnisse (12), wobei das Transportrad (14) mehrere Transportradaufnahmen (16) aufweist, wobei jede Transportradaufnahme (16) eingerichtet ist, um ein Behältnis (12) aufnehmen zu können, wobei das Transportrad (14) um eine Transportradachse (18) rotierbar ausgebildet ist,
- eine Zuführeinrichtung (20) zum getakteten und von dem Transport des Transportrads (14) unabhängigen Zuführen der Behältnisse (12) zu dem Transportrad (14) in einem Zuführbereich (22) der Vorrichtung (10),
- eine Abführeinrichtung (24) zum Abführen der Behältnisse (12) aus dem Transportrad (14) in einem Abführbereich (26) der Vorrichtung (10),
- eine Verschließeinrichtung (28) zum Verschließen der Behältnisse (12) mit Verschlüssen, die ausgebildet und angeordnet ist, um die Behältnisse (12) zu verschließen während sie in den Transportradaufnahmen (16) des Transportrades (14) aufgenommen sind,
- eine Inspektionseinrichtung (30), wobei die Inspektionseinrichtung (30) eingerichtet und angeordnet ist, um an einer Position des Transportrads (14) einen Verschlusszustand eines jeweiligen Behältnisses (12) in einer Transportradaufnahme (16) des Transportrades (14) zu überprüfen,
- wobei in Drehrichtung des Transportrades (14) der Zuführbereich (22), die Verschließeinrichtung (28), die Inspektionseinrichtung (30) und der Abführbereich (26) aufeinanderfolgend angeordnet sind,
- wobei die Vorrichtung (10) eingerichtet ist, die mittels der Inspektionseinrichtung (30) als nicht ordnungsgemäß verschlossen ermittelten Behältnisse (12) mittels des Transportrades (14) erneut der Verschließeinrichtung (28) zuzuführen,
- wobei die Vorrichtung (10) eingerichtet ist, um die nicht ordnungsgemäß verschlossenen Behältnisse (12) im Abführbereich (26) in ihren Transportradaufnahmen (16) im Transportrad (14) zu halten, sodass die nicht ordnungsgemäß verschlossenen Behältnisse (12) durch Drehung des Transportrads (14) wieder in den Zuführbereich (22) transportiert werden,
- wobei die Zuführeinrichtung (20) ausgebildet ist, um in diesem Fall die Zuführung weiterer Behältnisse (12) zu unterbrechen, so dass die nicht ordnungsgemäß verschlossenen Behältnisse (12) den Zuführbereich (22) passieren und erneut der Verschließeinrichtung (28) zugeführt werden können.

2. Vorrichtung (10) nach Anspruch 1, **dadurch gekennzeichnet, dass** die Zuführeinrichtung (20)
- ein erstes Radsegment (32) zum Zuführen der Behältnisse (12) zu den Transportradaufnahmen (16) des Transportrades (14) umfasst, das mindestens eine erste Radsegmentaufnahme (34) aufweist, die eingerichtet ist, um ein Behältnis (12) aufnehmen zu können,
- ein zweites Radsegment (36) zum Zuführen der Behältnisse (12) zu den Transportradaufnahmen (16) des Transportrades (14) umfasst, das mindestens eine zweite Radsegmentaufnahme (38) aufweist, die eingerichtet ist, um ein Behältnis (12) aufnehmen zu können,
- wobei das erste Radsegment (32), das zweite Radsegment (36) und/oder das Transportrad (14) eingerichtet sind, um die Behältnisse (12) von der ersten Radsegmentaufnahme (34) und/oder der zweiten Radsegmentaufnahme (38) an die Transportradaufnahmen (16) des Transportrades (14) in dem Zuführbereich (22) der Vorrichtung (10) zu überführen, insbesondere wobei das erste Radsegment (32) und das zweite Radsegment (36) um eine gemeinsame Radsegmentachse (40), insbesondere unabhängig voneinander, rotierbar ausgebildet sind.

3. Vorrichtung (10) nach Anspruch 1 oder 2, **dadurch gekennzeichnet, dass** die Zuführeinrichtung (20) mindestens einen Transportrechen (44) zum Zuführen der Behältnisse (12) zu dem ersten Radsegment (32) und/oder dem zweiten Radsegment (36) umfasst, wobei der Transportrechen (44) mindestens eine Transportrechenaufnahme (46) aufweist, die eingerichtet ist, um ein Behältnis (12) aufnehmen zu können.

4. Vorrichtung (10) nach einem der voranstehenden Ansprüche, **dadurch gekennzeichnet, dass** die Abführeinrichtung (24) ein um eine Abtransportradachse (48) rotierbares Abtransportrad (50) zum Abführen ordnungsgemäß verschlossener Behältnisse (12) aus den Transportradaufnahmen (16) des Transportrades (14) umfasst, wobei das Abtransportrad (50) mindestens eine Abtransportradaufnahme (52) aufweist, die eingerichtet ist, um ein Behältnis (12) aufnehmen zu können.

5. Vorrichtung (10) nach Anspruch 4, **dadurch gekennzeichnet, dass** die Vorrichtung (10) im Abführbereich (26) eine Weiche (54) umfasst, wobei die Weiche (54) eingerichtet ist, um wahlweise ein in der Transportradaufnahme (16) des Transportrades (14) aufgenommenes Behältnis (12) in die Abtransportradaufnahme (52) des Abtransportrades (50) zu überführen oder in der Transportradaufnahme (16) des Transportrades (14) zu belassen.

6. Vorrichtung (10) nach einem der voranstehenden Ansprüche, **dadurch gekennzeichnet, dass** die Vorrichtung (10) im Zuführbereich (22) eine Führungseinrichtung (56), insbesondere in Form einer Weiche, umfasst, wobei die Führungseinrichtung (56) eingerichtet ist, um mindestens ein, insbesondere als nicht ordnungsgemäß verschlossen ermitteltes, in der Transportradaufnahme (16) des Transportrads (14) aufgenommenes Behältnis (12) zumindest im Zuführbereich (22), insbesondere in einer weiteren Umdrehung des Transportrads (14), zu führen.

7. Verfahren zum Verschließen von Behältnissen (12) mit Verschlüssen, insbesondere Stopfen, umfassend die Schritte:
- getaktetes und unterbrechbares Zuführen von Behältnissen (12), insbesondere mittels einer Zuführeinrichtung (20), zu einem Transportrad (14);
- kontinuierliches Transportieren der Behältnisse (12) mittels des Transportrades (14);
- Verschließen der Behältnisse (12) mittels einer Verschließeinrichtung (28) mit jeweils einem Verschluss während die Behältnisse (12) in dem Transportrad (14) aufgenommen sind;
- Inspizieren der verschlossenen Behältnisse (12), insbesondere mittels einer Inspektionseinrichtung (30), während die Behältnisse (12) in dem Transportrad (14) aufgenommen sind;
- Ermitteln eines nicht ordnungsgemäß verschlossenen Behältnisses (12) und Unterbrechen der Zuführung weiterer Behältnisse;
- Transportieren des nicht ordnungsgemäß verschlossenen Behältnisses (12) mittels des Transportrades (14) zum erneuten Verschließen;
- Erneutes Verschließen des nicht ordnungsgemäß verschlossenen Behältnisses (12), insbesondere mittels der Verschließeinrichtung (28).

8. Verfahren nach Anspruch 7, **dadurch gekennzeichnet, dass** das Verfahren die Schritte umfasst:
- Zuführen von Behältnissen (12) mittels eines ersten Radsegments (32) durch eine rotierende Bewegung des ersten Radsegments (32) zu dem Transportrad (14) in einem Zuführbereich (22);
- Zuführen von Behältnissen (12) mittels eines zweiten Radsegments (36) durch eine rotierende Bewegung des zweiten Radsegments (36) zu dem Transportrad (14) in dem Zuführbereich (22);
- Bewegen des ersten Radsegments (32) und/oder des zweiten Radsegments (36) derart, dass das erste Radsegment (32) und das zweite Radsegment (36) außerhalb des Zuführbereichs (22) angeordnet sind, nachdem ein nicht ordnungsgemäß verschlossenes Behältnis (12) ermittelt worden ist;
- Transportieren des nicht ordnungsgemäß verschlossenen Behältnisses (12) von der Inspektionseinrichtung (30) durch den Abführbereich (26) und den Zuführbereich (22) mittels des Transportrades (14) erneut hin zur Verschließeinrichtung (28).

9. Verfahren nach Anspruch 8, **dadurch gekennzeichnet, dass** während die Behältnisse (12) dem ersten Radsegment (32) zugeführt werden, die in dem zweiten Radsegment (36) aufgenommenen Behältnisse (12) dem Transportrad (14) zugeführt werden und/oder dass während die Behältnisse (12) dem zweiten Radsegment (36) zugeführt werden, die in dem ersten Radsegment (32) aufgenommenen Behältnisse (12) dem Transportrad (14) zugeführt werden.

10. Verfahren nach einem der Ansprüche 7 bis 9, **dadurch gekennzeichnet, dass** zur Durchführung des Verfahrens eine Vorrichtung (10) nach einem der Ansprüche 1 bis 6 verwendet wird.
